Europäisches Patentamt

European Patent Office

Office européen des brevets

(11) Publication number: **0 073 806**
**B1**

(12) **EUROPEAN PATENT SPECIFICATION**

(45) Date of publication of patent specification: **08.01.86**

(51) Int. Cl.⁴: **A 23 K 1/00** // A01K5/02

(21) Application number: **82900939.8**

(22) Date of filing: **17.03.82**

(86) International application number:
**PCT/DK82/00023**

(87) International publication number:
**WO 82/03159 30.09.82 Gazette 82/23**

(54) **Method for feeding animals.**

(30) Priority: **17.03.81 DK 1194/81**

(43) Date of publication of application:
**16.03.83 Bulletin 83/11**

(45) Publication of the grant of the patent:
**08.01.86 Bulletin 86/02**

(84) Designated Contracting States:
**AT BE CH DE FR GB LI NL SE**

(56) References cited:
**WO-A-80/01231**
**DE-A-1 507 083**
**DE-A-2 035 476**
**DE-A-2 513 221**
**DE-B-1 965 703**
**DK-A- 2 439**
**DK-A- 40 982**
**DK-B- 131 262**
**DK-B- 135 691**
**SE-B- 396 270**

(73) Proprietor: **ADVANCED FEEDING SYSTEMS K/S**
**Vestergade 97-101**
**DK-5000 Odense C (DK)**

(72) Inventor: **Blicher, Steen**
**1 Dalkildegaardsallé Dalkildegaard**
**DK-5600 Faaborg (DK)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method for feeding animals, in particular pigs, at a stage at which their digestion system is undergoing a development.

Experiments concerning feed for pigs from weaning to about 25 kg live weight (weaning pigs) have hitherto been performed on the assumption that the feed constitutes a very essential part of the costs in the production of pigs.

The recent changes in the interest and the depreciation level in modern pigsties, however, result in the fact that besides a cheap feeding material, the pigsty utilization is also to be given high priority, and the constantly increasing quality demands for animals to be slaughtered result in increasing interest in more efficient feed and in the importance of the feeding technique to the feeding efficiency.

The new feeding principle known under the name of the "Biomat" (trade mark) feeding principle, which is disclosed e.g. in GB Patent Application No. 80 26126 (Publication No. 2 056 837A), opens up the possibility of influencing conditions in connection with feeding of pigs which have hitherto been beyond outside influence.

The "Biomat" (trade mark) principle may be expressed as a method for feeding a plurality of untethered animals, such as pigs or hogs, at their respective feeding places in the same enclosure, said method comprising supplying during each feeding period to each of said feeding places portions of feed, each portion not exceeding a few mouthfuls and preferably not substantially exceeding one mouthful, at such time intervals that the rate of feed supply to each of said feeding places substantially corresponds to the desired eating rate of each of said animals. Preferably a portion of dry feed and a corresponding portion of liquid are supplied simultaneously to each feeding place.

The most important features of the "Biomat" (trade mark) principle are that it becomes possible:

— To secure that all pigs in the same pigsty are fed according to the desired standard.
— To influence the appetite of the pigs by making it dependent on the mouthfull-wise dosage, thus influencing the pigs so as to make them eat considerably more than was previously obtained in the known art, and to decide the eating rate within certain limits.
— To mix the feed individually from pigsty to pigsty dependent on the age of the pigs and in accordance with the development of the digestion system.

The increased possibility of influencing essential feeding conditions thus obtained by the "Biomat" (trade mark) principle is utilized in the process according to the present invention which is, in the preferred embodiments, performed by using the "Biomat" (trade mark) principle, but which is not, however, limited to this.

The purpose of the method of the present invention is to increase the productivity in the production of animals at a stage at which their digestion system is undergoing a development, in particular pigs from weaning to a live weight of about 25 kg, by utilizing a feeding system which may be integrated in the development of the digestion system of the animals with a view to obtaining lower feeding costs, higher daily growth and/or higher slaughter quality, preferably a combination of all of these three especially desirable effects. The method utilizes an especially careful adaption between the development of the animals and the composition of the feed.

Thus, in accordance with the principles of the invention, the feed fed to the animals is supplied from at least three stock constituents, one of which being a solid carbohydrate-rich feed, the other one being a mixture of digestible protein which is fed in fluid form, and the third one being water, and the ratio between the digestible protein and the carbohydrate-rich feed is adjusted to the development of the digestion system of the animals through, at least substantially daily reduction of said ratio. As appears from the following, it is preferred that the ratio be reduced substantially at each feeding.

According to an aspect of the invention, the animals fed by the above-identified method are untethered animals which are fed at their respective feeding places in the same enclosure by supplying during each feeding period to each of said feeding places portions of the feed, each portion not exceeding a few mouthfuls and preferably not substantially exceeding one mouthful, at such time intervals that the rate of feed supply to each of said feeding places substantially corresponds to the desired eating rate of each of said animals.

In a preferred embodiment of the invention which will be discussed in greater detail in the following, the stock constituent mixture of digestible protein is a fluid mixture.

In the following, the invention will be described in detail in connection with in particular pigs, but as it will be understood the general aspect of the principle of the invention is not limited to utilization for the feeding of pigs or hogs.

In particular during the weaning period, pigs are subject to a quick and dramatic change in the enzyme production of the digestion system. Known feeding methods are not sufficiently adjusted to this quick change. When the pigs are fed according to the present invention, the feed mixture may be adjusted to the enzyme production of the pigs or to a desired development of the enzyme production of the pigs by frequent adjustments of the composition of the feed, the quantitative administration of the feed and the intervals at which the feed is administered. As indicated above, it is preferred to adjust the composition of

2

the feed at least daily during the weaning period, and indeed, in a preferred embodiment, an adjustment of the composition is performed during the individual feeding.

As indicated above, the adjustment of the composition of the feed may easily be obtained by mixing the feed for each feeding from at least three stock constituents, one of which being a normal carbon hydrate-rich feed such as gritting, the other one being a fluid mixture having a high content of digestible protein or available protein, in particular a high content of protein of animal origin, and the third one being water, optionally containing additives.

Thus, in the method of the invention, the total consumption of the pigs may be a mixture of e.g. water, a carbon hydrate-rich conventional feedstuff such as gritting and a fluid feed material with a high content of digestible protein, in particular protein from animal sources. The adjustment of the composition of the feed and/or the quantitative administration of the feed for the development of the digestion system of the pigs or for a desired accelerated development of the digestion system of the pigs is performed through at least substantially daily adjustments of the composition which is in total fed to the pigs during a feeding session by reduction of the ratio between the digestible protein and the carbohydrate-rich feed ("macroadjustment"). In an embodiment of the invention, the ratio between the digestible protein and the carbohydrate-rich feed is reduced at each feeding, and, according to a preferred embodiment a reduction of the ratio between the mixture of digestible protein in fluid form and the carbohydrate, is even performed during the individual feeding ("microadjustment"). The macroadjustment may be performed in accordance with a curve which represents a predetermined ratio between digestible protein and carbohydrate during a controlled development of the animals. This optimum curve may be the curve which is known or may be found to be true for the animals in question under normal, favourable development, or it may be a curve which represents the optimum conditions during a development which is deliberately accelerated using the principle of the present invention. In both cases, it is important to perform the macroadjustment of the feed for the desired development of the pigs very frequently and during the weaning period preferably at least daily and most preferably substantially at each feeding, as a less frequent adjustment would mean that the pigs receive a feed which is not the optimum for their development and/or that parts of the feed composition are in fact wasted; a less frequent adjustment would also mean more dramatic changes in the food composition at each adjustment which may cause stomach upset.

As mentioned above, the feed composition may also advantageously be changed during the individual feeding (microadjustment) so that in addition to the establishment of the optimum feed composition adapted to the development stage of the animal as secured through the ratio between the total amounts of the feed constituents delivered during a feeding, a dynamic adjustment of the feed composition to the relative capacity (relative with respect to the feed composition) of the digestion system is obtained during the feeding. Such adjustment during the feeding is one which delivers a relatively higher content of digestible protein and a relatively lower content of carbohydrates in the feed at the beginning of the feeding and a relatively lower content of digestible protein and a relatively higher content of carbohydrate at the end of the feeding.

In a preferred embodiment of the method of the present invention, the feed is mixed from stock constituents of the kind mentioned above individually from pigsty to pigsty and from day to day, optionally from feeding to feeding, (and, according to one preferred embodiment, the composition is "microadjusted" during the individual feeding) by means of a feeding apparatus which provides mouthfull-wise dosage, preferably a feeding apparatus of the type described in the above-mentioned GB patent application No. 80 26126 (Publication No. 2 056 837A) or any other apparatus capable of performing the method described in the above-mentioned patent applications.

The ingredients employed may e.g. be water, gritting and a fluid supplemental feed material with a high content of digestible protein.

Also, the fluid form of the protein-rich supplemental feed material makes it possible to add, in advance, enzymes such as pepsin which will function partly as a pre-digestion and partly as an accelerator of the development of the digestion system of the pigs.

In addition, additives of various conventional kinds such as trace minerals, iron supplements, growth promoting antibiotics, and/or microorganism cultures may be added to the fluid supplemental feed material.

In the known art, it has also been suggested and practiced to compose the feed from a basic feed and a protein-rich supplemental feed, but it is the frequent, at least substantially daily adjustment which is one of the special features of the present invention. Most supplemental feed compositions used in the known art are characterized in that they mainly contain soy meal and highly refined proteins which have all originally typically been fluid and which then have been dried. This conversion from fluid to dry form (e.g. milk powder, dry yeast, whey powder, meat and blood meal, etc.) is partly an energy demanding and cost increasing operation and partly often results in loss in nutritive value during the process.

According to one aspect of the present invention, the fluid mixture of digestible protein used as a protein-rich supplemental feed consists of constituents which have not been exposed to any drying treatment. Such a feeding material may easily be administered by means of, e.g., a feeding apparatus of the "Biomat" (trade mark) type, and may—when the ratio between administration of liquid and solid feed is adjusted in the feeding apparatus—be used of the above-mentioned stock constituents.

An important example of a fluid mixture of digestible protein is a "protein soup" which consists of

**0 073 806**

constituents which have not been subject to any drying treatment and which are selected from the group consisting of blood, slaughterhouse waste, partially digested intestine content from slaughterhouses, household food waste, and industrial protein waste, e.g. from the canned food industry or the snack industry, fish pulp, whey, yeast cream, skim milk, and casein waste. Such a fluid mixture of digestible protein may, e.g., utilize the very considerable amounts of waste products from the slaughterhouses and dairies without the expensive and often partly destructive working up process, and the mixture may wholly or partially replace expensive feed materials such as dried protein.

In the method according to the invention, the feeding rhythm and feeding mechanism is preferably adjusted to be in the best possible accordance with the development of the pigs. Thus, the weaning period may start by feeding with same frequency as sows suckle the pigs, i.e. frequent at the beginning and then little by little and gradually increasing the time intervals between the feedings.

Also, the feeding rhythm may, according to one embodiment of the invention, be changed during each individual feeding by changing the interval between the mouthfuls, in order to obtain a dynamic adaption of the rate at which the mouthfuls are served to the capacity of the pigs during each feeding session.

In order to intensify the conditions for the eating reflex of the pigs it may be suitable according to the invention to mount, for each trough section in the feeding apparatus, a light signal which—just like the sound signal made by the mechanism of the feeding apparatus per se—gives a signal when the feeding apparatus is running, whereby the pigs learn the system quickly and whereby individually shining feedings are obtained, so that there is no need to turn on the common pigsty light before each feeding (which does not have to take place at the same time for all pigsties in a stable, as the feeding frequency is often altered in the weaning period).

A further enhancement of the eating reflex of the pigs may be obtained by means of an acoustic signal which accompanies the preparation of the apparatus for the feeding session and/or the delivery of the individual mouthfuls. According to one especially important embodiment of this aspect of the invention, the acoustic signal is a reproduction of the sow's suckling grunt.

The fluid mixture of digestible protein is preferably composed in such a manner that solely by being combined with the carbohydrate-rich constituent, e.g. barley gritting,—and with the water dosed at the feeding—in a varying ratio, it may meet the nutritive demand for every stage of development for pigs from 2 weeks or 3 weeks and up till slaughter weight. Thus, one single supplemental feed material meets the total demand for supplemental feed during the whole breeding period. Another possibility, is to work with a special mixture of digestible protein which nutritively is composed so that it meets the above-mentioned demands during the weaning period, (that is, normally during the period where the pigs are from 2 to 12 weeks old, but also including the cases where the pigs are weaned in a very young age such as the second day after farrowing).

By utilization of the principle of the invention, it becomes possible to increase the feed intake of the pigs during the weaning period considerably, up to about 35%. The optimum parameters for each particular race of pigs, pigsty type, composition of available feed materials, etc. may easily be determined by the skilled art worker. In many cases, it will be suitable to increase the feed intake of the pigs by about 20%.

The fluid mixture of digestible protein may as previously mentioned be based, e.g., on blood from slaughterhouses and slaughterhouse waste which has been sufficiently comminuted and distributed in the blood. Also dairy waste, e.g. whey and casein waste from cheese production, is a good basis for the mixture of digestible protein. Raw fish pulp may suitably also be a constituent of the mixture of digestible protein, in that, in addition to showing the well-known valuable protein composition, it also has a beneficial influence in that it contributes to lower the viscosity of the mixture, and in that the pepsin from the fish mass has a hydrolyzing effect on the proteins. Household food waste, suitably obtained from households where the waste is sorted in a food waste part and a non-food waste part, constitutes another interesting source of available protein, and will often show an amino acid balance which may be utilized to balance the final amino acid balance of the fluid mixture of digestible protein.

The production of the fluid mixture of digestible protein will usually simply consist of a mixing of the constituents, if necessary with communition of possible solid constituents which are to be distributed in the resulting fluid material. The resulting "protein soup", which normally has a dry matter content of about 20—45%, typically about 25—40%, is thereafter normally autoclaved. If the protein soup has a too high viscosity at room temperature, enzymes may be added to lower the viscosity. Preservation of the protein soup may be performed by adjusting the pH to an acidic value in a manner known per se by addition of an acceptable acid such as formic acid. Another preservation method is addition of microorganism cultures which will generate acid to lower the pH to about 4—5, e.g., lactic acid-producing bacteria. Thus, according to an embodiment of the invention, the fluid mixture is preserved by lowering its pH to about 4—5 by addition of a lactic acid-producing bacterial culture in an amount of about $10^4$—$10^6$ per gram of the feed and securing that the mixture contains sufficient nutrients for the culture. Examples of bacteria which are suitable for this purpose are lactobacillus acidophilus, lactobacillus plantero, lactobacillus lactis, or streptococcus lactis or streptococcus cremoris.

The fluid mixture may suitably be made by the same known processes as are used for preparing dried protein-rich animal feed from the same types of materials, but omitting the final drying stage.

In order to obtain a standardization of the fluid mixture and to avoid that variations in the delivery of

4

raw materials will result in too great variations in the final fluid material, it may be desirable to divide the fluid or the raw materials into components according to composition, e.g., into fat, protein, and collagen water, etc., and thereafter to combine these components in desired ratios to obtain a standardized product.

The transport of the fluid mixture from the producer to the farmer may e.g. take place in tank trucks as is the case with the transport of mink feed.

The farmer may, e.g., store the fluid mixture in a storage tank from where it may be led to a feed distribution apparatus, preferably of the mouthful-delivering type described in the above-mentioned GB patent application No. 80 26126, Publication No. 2 056 837A. If desired, the fluid mixture may be subjected to another autoclaving by passing a flowthrough autoclave when withdrawn from the storage tank.

The preservation of the fluid mixture may also be obtained using normal preserving additives, and lactic acid-producing bacterial culture may also be added by the farmer, if desired.

The character of the supplemental feed of the invention and the way in which it is prepared make it possible to add desired additives, such as enzymes, microorganisms, vitamins, which would be completely or partially destroyed in the conventional processes for manufacturing pig feed. Thus, according to the invention, the fluid mixture may additionally contain components selected from the group consisting of iron supplements, trace mineral additives and growth promoting antibodies.

Thus, it will be understood that the process and the supplemental feed material according to the present invention open up the possibility of controlling and optimizing the development of the pigs, especially of accelerating their development during the weaning period and at the same time keeping the feed costs low by using cheap waste products from slaughterhouses, dairies and the industry.

In the drawing

Fig. 1 shows curves representing the weight development of three groups of pigs fed according to the invention (groups 1 and 2) and with a conventional high protein weaning feed (group 3), respectively, over a period from the 7th to the 28th of a month,

Fig. 2 shows a curve A representing the ratio between protein soup (PS) and basic feed (BF), as a function of the age/weight of the pigs, as used as a basis in the feeding experiments illustrated in Fig. 1, and a curve (B) representing the same ratio for another adjustment scheme aimed at presenting proportionally more digestible protein at the beginning of the weaning period and proportionally less at the end of the weaning period, such as discussed above,

Fig. 3 schematically illustrates the principle of the invention as apparent from the composition of one feed unit with respect to its two constituents protein soup (PS) and basic feed (BF) during a weaning period,

Fig. 4 illustrates the amounts of protein soup and basic feed fed to the pigs in group 1 of Fig. 1, and

Fig. 5 illustrates the amounts of protein soup and basic feed in the form of barley gritting (BG) fed to the pigs in group 2 of Fig. 1.

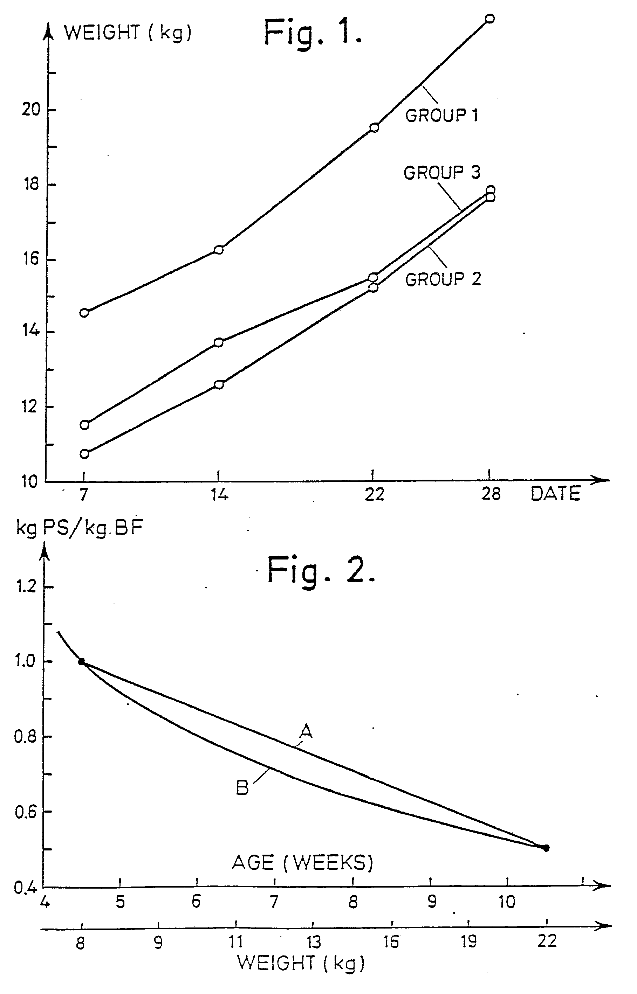

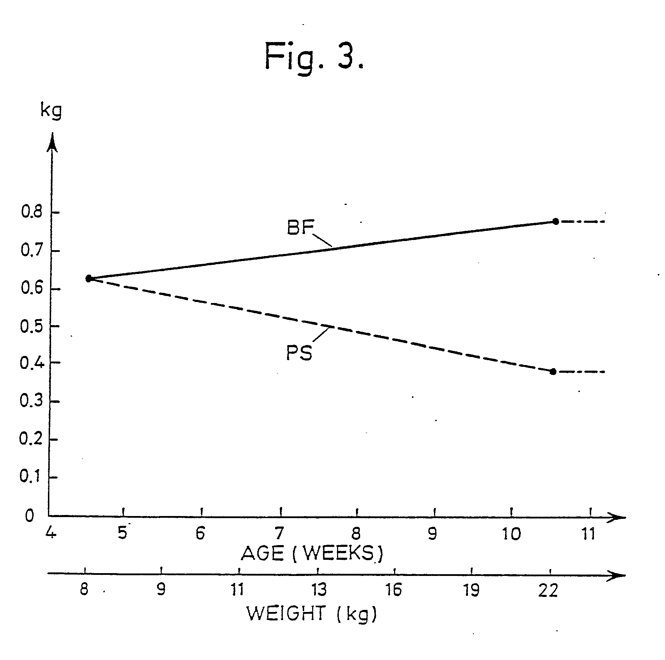

The X-axis of Figs. 2 and 3 show both age and weight. The relationship between age and weight in Fig. 2 is substantially the relationship which is true for normal feeding, which means that when actually working according to the method of the invention, one obtains a faster weight development than illustrated in Fig. 2, typically, e.g., an improvement corresponding to about one week.

From the course of curve B in Fig. 2, it will be noted that a very high protein soup administration is prescribed at the very early age (not included in Fig. 2). Thus, in many cases, it may be advantageous to start with a ratio between protein soup and basic feed of as much as 2:1 in the first week or the first couple of weeks and then to reduce the ratio to less than 1:1 at the age of about 4—5 weeks. Generally, the younger the pigs are, the higher demand do they have for proportionally more protein which they are able to digest (protein from animal sources).

Generally once the pigs have been successfully started using a high proportion of digestible protein, their development will be faster and they will sooner become able to utilize carbohydrate and non-animal protein, such as indicated by the further course of curve B.

The normal duration of one feeding of the pigs in the weaning period will typically be from between 5—6 minutes (at the beginning of the weaning period) to about 10 minutes (at the end of the weaning period).

When a "microadjustment" is performed, this may typically comprise addition of proportionally more protein soup at the start of the feeding (e.g., about 50—75% more than the nominal amount to be the average), and proportionally less during the later minutes of the feeding, so as to obtain the average desired according to the "macroadjustment". In this manner, the capacity and secretion of the digestion system of the pigs is optimally utilized.

As an example, a combination of one kg of basic feed and one kg of protein soup (which, according to Fig. 1 is used for pigs having a weight of about 7—9 kg) contains the following per feed unit:

| digestible fat | 59 | grams |
| digestible protein | 176 | grams |
| digestible lysine | 10.4 | grams |
| digestible methionine | 3.5 | grams |
| digestible cystine | 2.3 | grams |
| calcium | 11.5 | grams |
| phosphor | 9.3 | grams |

For pigs of an age of 10—11 weeks, weight about 20—24 kg, the combination according to Fig. 1 (1 kg of basic feed and 0.5 kg of protein soup) contains the following constituents per feed unit:

| digestible fat | 39 | grams |
| digestible protein | 160 | grams |
| digestible lysine | 8.9 | grams |
| digestible methionine | 3.0 | grams |
| digestible cystine | 2.4 | grams |
| calcium | 7.3 | grams |
| phosphor | 7.0 | grams |

Example 1

A protein soup was made from the ingredients stated in Table 1 in the ratios stated in Table 1. The ingredients were mixed in a vessel with disintegration until a fluid of suitable viscosity had been obtained. The fluid was thereafter sterilized by autoclaving.

TABLE 1
Composition of protein soup

|  | Per cent | Kg dry matter | Feed units | g Ca | g P |
|---|---|---|---|---|---|
| Blood | 30.0 | 5.7 | 7.5 | — | — |
| Slaughter waste | 50.0 | 15.0 | 12.5 | 1500 | 750 |
| Technical fat | 8.0 | 8.0 | 23.6 | — | — |
| Fishmeal | 5.0 | 4.7 | 7.1 | 175 | 111 |
| Skim-milk powder | 5.0 | 4.8 | 6.5 | 68 | 49 |
| Additive *) | 2.0 | — | — | — | 190 |
| per 100 kg | (100.0) | 38.2 | 57.2 | 1743 | 1100 |
| per kg |  | 0.38 | 0.57 | 17.4 | 11.0 |
| per feed unit |  | 0.67 | 1.00 | 30.5 | 19.2 |

*) 1.0% monosodiumphosphate
0.1% methionine
0.5% vitamin/trace mineral mixture, from Løvens Kemiske Fabrik, Copenhagen, Denmark
0.4% NaCl

6

The content of fat, digestible protein and the amino acids lysine, methionine and cystine in the protein soup derived from each of the constituents of the soup appear from Table 2.

TABLE 2
Content of digestible components in protein soup

| | Kg dry matter | Gramme digestible | | | | |
| --- | --- | --- | --- | --- | --- | --- |
| | | Fat | Protein | Lysine | Methio-nine | Cystine |
| Blood | 5.7 | 90 | 4050 | 372 | 30 | 36 |
| Slaughter waste | 15.0 | 1100 | 5000 | 230 | 55 | 25 |
| Technical fat | 8.0 | 7040 | — | — | — | — |
| Fish meal | 4.7 | 356 | 3300 | 261 | 92 | |
| Skim milk powder | 4.8 | 45 | 1685 | 131 | 40 | 13 |
| Additives *) | — | — | — | — | 100 | — |
| per 100 kg | 38.2 | 8631 | 14035 | 994 | 317 | 107 |
| per kg | 0.38 | 86 | 140 | 9.9 | 3.2 | 1.1 |
| per feed unit | 0.67 | 151 | 245 | 17.4 | 5.5 | 1.9 |

*) 1.0% monosodiumphosphate
0.1% methionine
0.5% vitamin/trace mineral mixture, from Løvens Kemiske Fabrik, Copenhagen, Denmark
0.4% NaCl

A basic feed mixture was made from barley meal and soy meal in the ratios stated in Table 3. Table 3 also contains the corresponding values for feed units and the content of calcium and phosphor derived from the barley and the soy meal, respectively.

TABLE 3
Composition of basic feed

| | Per cent | Feed units | g Ca | g P |
| --- | --- | --- | --- | --- |
| Barley | 82 | 82.0 | 48 | 261 |
| Soy meal | 18 | 20.5 | 52 | 117 |
| per 100 kg | (100) | 102.5 | 100 | 378 |
| per kg | | 1.03 | 1.0 | 3.8. |
| per feed unit | | 1.00 | 1.0 | 3.7 |

The content of digestible fat, digestible protein, and the amino acids lysine, methionine and cystine in the barley and soy meal appears from Table 4.

# 0 073 806

### TABLE 4
#### Content of digestible components in basic feed

| | Fat | Gramme digestible | | | |
| | | Protein | Lysine | Methionine | Cystine |
| --- | --- | --- | --- | --- | --- |
| Barley | 834 | 6970 | 246 | 123 | 148 |
| Soy meal | 86 | 7200 | 430 | 115 | 113 |
| per 100 kg | 920 | 14170 | 676 | 238 | 261 |
| per kg | 9.2 | 142 | 6.8 | 2.4 | 2.6 |
| per feed unit | 9.0 | 138 | 6.6 | 2.3 | 2.5 |

The protein soup of Tables 1 and 2 and the basic feed of Tables 3 and 4 were combined in varying amounts and used for feeding of weaning pigs, group 1, as described below.

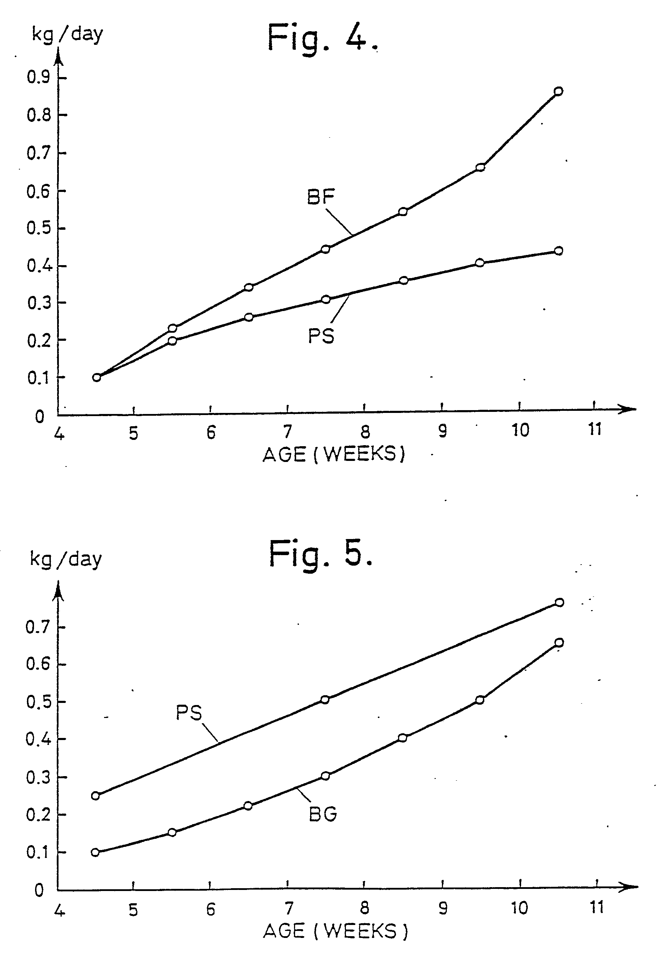

Three groups of weaning pigs were fed with different feeds. Each group consisted of 14 pigs. For practical reasons, the feeding experiment was performed over the same period for the three groups although this meant that the groups did not have the same average starting weight. Group 1 received the protein soup of Tables 1 and 2 combined with the basic feed of Tables 3 and 4 in the amounts illustrated in Fig. 4. Group 2 received the same protein soup as group 1, but received a basic feed which consisted only of the same barley meal as is characterized in Table 3, in other words, group 2 received no soy meal. To compensate for the smaller amount of total protein, the protein soup was administered to group 2 in such an amount that the total protein per kg feed for each particular age of the pigs was maintained substantially the same as for group 1. The amounts of protein soup (PS) and barley gritting (BG) administered during the period appear from Fig. 5.

Group 3 was a control group which received a conventional high protein weaning feed (FAF T 6 (trademark) from FAF, Svendborg, Denmark).

The results of these experiments appear from Fig. 1. A comparison between the development from 14.5 to 17.7 kg for groups 1, 2 and 3 shows that group 1 has practically the same weight gain as group 3 in spite of the fact that the diet which group 3 received had a higher total amount of protein. From the curves, it will also be noted that in the same period, group 2 had a considerably higher weight gain than both the reference group and group 1 although group 2 received no protein from soy meal. In other words, the protein from the protein soup in combination with only barley meal results in a higher weight gain than the combination of protein soup, soy meal and barley meal.

Example 2

A protein soup was made from the ingredients stated in Table 5 in the ratios stated in Table 5. The ingredients were mixed in a vessel with disintegration until a fluid of suitable viscosity had been obtained. The fluid was thereafter sterilized by autoclaving.

8

TABLE 5
Composition of protein soup

|  | Per cent | Kg dry matter | Feed units | g Ca | g P |
|---|---|---|---|---|---|
| Blood | 15.0 | 2.9 | 3.8 | — | — |
| Slaughter waste | 39.7 | 11.9 | 9.9 | 1191 | 596 |
| Fish pulp | 20.0 | 6.2 | 12.0 | 80 | 100 |
| Skim milk | 20.0 | 1.8 | 2.4 | 30 | 20 |
| Technical fat | 3.0 | 3.0 | 8.9 | — | — |
| Monosod. phosph. | 1.0 | 1.0 | — | — | 190 |
| Methion. mixt. 10% | 1.0 | 0.9 | — | — | — |
| Carbovit Mikro 4001 (Trademark) | 0.3 | 0.3 | — | — | — |
| per 100 kg | (100.0) | 28.0 | 37.0 | 1301 | 906 |
| per kg |  | 0.28 | 0.37 | 13.0 | 9.1 |
| per kg dry matter |  | 1.00 | 1.32 | 46.5 | 32.4 |
| per feed unit |  | 0.76 | 1.00 | 35.2 | 24.5 |

The content of fat, digestible protein and the amino acids lysine, methionine and cystine in the protein soup derived from each of the constituents of the soup appear from Table 6.

TABLE 6
Content of digestible components in protein soup

|  | Kg protein | Gramme digestible | | | | |
|---|---|---|---|---|---|---|
|  |  | Fat | Protein | Lysine | Methionine | Cystine |
| Blood | 2.3 | 45 | 2025 | 186 | 15 | 18 |
| Slaughter waste | 6.0 | 873 | 3970 | 183 | 44 | 20 |
| Fish pulp | 3.1 | 2200 | 2720 | 210 | 74 | 30 |
| Skim milk | 0.7 | 20 | 660 | 54 | 12 | 6 |
| Technical fat | — | 2640 | — | — | — | — |
| Methion.mixt 10% | — | — | — | — | 100 | — |
| per 100 kg | 12.1 | 5778 | 9375 | 633 | 245 | 74 |
| per kg | 0.12 | 58 | 94 | 6.3 | 2.5 | 0.7 |
| per kg dry matter | 0.43 | 206 | 335 | 22.6 | 8.8 | 2.6 |
| per feed unit | 0.33 | 156 | 253 | 17.1 | 6.6 | 2.0 |

# 0 073 806

## Claims

1. A method for feeding animals at a stage at which their digestion system is undergoing a development, to increase the productivity in the production of the animals, characterized in that the feed fed to the animals is supplied from at least three stock constituents, one of which being a solid carbohydrate-rich feed, the other one being a mixture of digestible protein which is fed in fluid form, and the third one being water, and that the ratio between the digestible protein and the carbohydrate-rich feed is adjusted to the development of the digestion system of the animals through, at least substantially daily reduction of said ratio.

2. A method according to claim 1 wherein the animals are untethered animals which are fed at their respective feeding places in the same enclosure by supplying during each feeding period to each of said feeding places portions of the feed, each portion not exceeding a few mouthfuls and preferably not substantially exceeding one mouthful, at such time intervals that the rate of feed supply to each of said feeding places substantially corresponds to the desired eating rate of each of said animals.

3. A method according to claim 1 or 2 wherein the stock constituent mixture of digestible protein is a fluid mixture.

4. A method according to any of the preceding claims wherein the animals are pigs.

5. A method according to claim 4 wherein the pigs are pigs from weaning up to a live weight of about 25 kg.

6. A method according to any of the preceding claims wherein the ratio between the digestible protein and the carbohydrate-rich feed is reduced at each feeding.

7. A method according to any of the preceding claims wherein the ratio between the mixture of digestible protein and the carbohydrate is reduced during the individual feeding.

8. A method according to claim 5 wherein the reduction of the ratio is performed in accordance with a curve (A, B; BF, PS; PS, BG) representing a predetermined desired adjustment of the relationship between digestible protein and carbohydrate during a controlled development of the animals.

9. A method according to any of claims 4—8 wherein the feed is mixed individually from pigsty to pigsty and from day to day and optionally from feeding to feeding by means of a feeding apparatus which provides a mouthful-wise dosage.

10. A method according to any of claims 1—9 wherein the fluid mixture of digestible protein consists of constituents which have not been subject to any drying treatment, the said constituents being selected from the group consisting of blood, slaughterhouse waste, partially digested intestine content from slaughterhouses, household waste, industrial protein waste, fish pulp, whey, yeast cream, skim milk and casein waste.

11. A method according to claim 10 wherein the fluid mixture contains added components selected from enzymes, microorganisms, acids, vitamins, and minerals.

12. A method according to claim 10 or 11 wherein the fluid mixture has a dry matter content of about 20—45%, in particular about 25—40% by weight.

13. A method according to claim 11 or 12 wherein the fluid mixture is preserved by lowering its pH to about 4—5 by addition of a lactic acid-producing bacterial culture in an amount of about $10^4$—$10^6$ per gram of the feed and securing that the mixture contains sufficient nutrients for the culture.

14. A method according to any of claims 10—13 wherein the fluid mixture additionally contains components selected from the group consisting of iron supplements, trace mineral additives and growth promoting antibiotics.

## Patentansprüche

1. Verfahren zur Fütterung von Tieren auf einer Stufe, we ihr Verdauungssystem eine Entwicklung durchläuft, um die Producktivität in der tierischen Produktion zu erhöhen, dadurch gekennzeichnet, daß das Futter, das den Tieren verfüttert wird, aus mindestens drei Grundbestandteilen besteht, von denen der erste ein festes kohlenhydratreiches Futter, der zweite eine Mischung aus verdaulichem Protein, das in flüssiger Form verfüttert wird, und der dritte Wasser ist, und daß das Verhältnis zwischen dem verdaulichen Protein und dem kohlenhydratreichen Futter durch eine im wesentlichen mindestens tägliche Reduktion davon der Entwicklung des Verdauungssystems der Tiere angepaßt wird.

2. Verfahren gemäß Anspruch 1, dadurch gekennzeichnet, daß die Tiere nicht angebunden sind, und an ihren jeweiligen Fütterungsplätzen in derselben Einzäunung dadurch gefüttert werden, daß man im Laufe jeder Fütterungsperiode jedem der Fütterungsplätze Futterportionen zuführt, die jeweils ein paar Mundvoll und vorzugsweise im wesentlichen einen Mundvoll nicht übersteigen, in solchen Zeitintervallen, daß die Geschwindigkeit der Futterzuführung zu jedem Fütterungsplatz der Freßgeschwindigkeit jedes Tieres im wesentlichen entspricht.

3. Verfahren gemäß Anspruch 1 oder 2, dadurch gekennzeichnet, daß die Mischung aus verdaulischem Protein eine flüssige Mischung ist.

4. Verfahren gemäß einem der vorhergehenden Ansprüche, dadurch gekennzeichnet, daß die Tiere Ferkel sind.

10

5. Verfahren gemäß Anspruch 4, dadurch gekennzeichnet, daß die Ferkel Ferkel vom Entwöhnungszeitpunkt bis zu einem Lebendgewicht von etwa 25 kg sind.

6. Verfahren gemäß einem der vorhergehenden Ansprüche, dadurch gekennzeichnet, daß das Verhältnis zwischen dem verdaulichen Protein und dem kohlenhydratreichen Futter bei jeder Fütterung reduziert wird.

7. Verfahren gemäß einem der vorhergehenden Ansprüche, dadurch gekennzeichnet, daß das Verhältnis zwischen der Mischung aus verdaulichem Protein und dem Kohlenhydrat im Laufe der einzelnen Fütterung reduziert wird.

8. Verfahren gemäß Anspruch 5, dadurch gekennzeichnet, daß die Reduktion des Verhältnisses nach einer Kurve (A, B; BF, PS; PS, BG) durchgeführt wird, welche Kurve eine vorausbestimmte, gewünschte Anpassung des Verhältnisses zwischen verdaulichem Protein und Kohlenhydrat während einer kontrollierten Entwicklung bei den Tieren darstellt.

9. Verfahren gemäß einem der Ansprüche 4—8, dadurch gekennzeichnet, daß das Futter von Schweinestall zu Schweinestall und von Tag zu Tag und eventuell von Fütterung zu Fütterung mit einem Fütterungsapparat individuell gemischt wird, welcher Apparat eine mundvollsgroße Dosis abgibt.

10. Verfahren gemäß einem der Ansprüche 1—9, dadurch gekennzeichnet, daß die flüssige Mischung von verdaulichem Protein aus Bestandteilen besteht, die nicht getrocknet worden sind, wobei die Bestandteile aus der Gruppe bestehend aus Blut, Schlachtabfall, aus Schlächtereien herrührendem, teilweise verdautem Darminhalt, Haushaltsabfall, industriellem Proteinabfall, Fischpulp, Molke, Heferahm, Magermilch und Kaseinabfall ausgewählt sind.

11. Verfahren gemäß Anspruch 10, dadurch gekennzeichnet, daß die flüssige Mischung weitere unter Enzymen, Mikroorganismen, Säuren, Vitaminen und Mineralen ausgewählte Bestandteile enthält.

12. Verfahren gemäß Anspruch 10 oder 11, dadurch gekennzeichnet, daß die flüssige Mischung einen Trockensubstanzgehalt von etwa 20—45, im besonderen 25—40 Gewichtsprozent hat.

13. Verfahren gemäß Anspruch 11 oder 12, dadurch gekennzeichnet, daß die flüssige Mischung dadurch konserviert wird, daß ihr pH-Wert durch Zusatz einer milchsäureproduzierenden Bakterienkultur in einer Menge von etwa $10^4$—$10^6$ pro Gramm Futter auf etwa 4—5 reduziert wird, und dadurch, daß defür gesorgt wird, daß das Futter ausreichende Nährstoffe für die Kultur enthält.

14. Verfahren gemäß einem der Ansprüche 10—13, dadurch gekennzeichnet, daß die flüssige Mischung außerdem Bestandteile enthält, die aus der Gruppe bestehend aus Eisenbeigaben, Spurenmineralzusatzstoffen und wachstumsfördernden Antibiotika ausgewählt sind.

**Revendications**

1. Procédé pour l'affouragement d'animaux à un stade, où leur appareil digestif traverse un développement, afin d'augmenter la productivité dans la production animale, caractérisé en ce que la nourriture donnée aux animaux est obtenue d'au moins trois constituants de base dont le premier est une nourriture solide riche en hydrate de carbone, le second est un mélange de protéine digestible donné sous une forme liquide, et le troisième est de l'eau, et en ce que la proportion entre la protéine digestible et la nourriture riche en hydrate de carbone est adaptée au développement de l'appareil digestif des animaux par une réduction de la proportion essentiellement au moins une fois par jour.

2. Procédé selon la revendication 1, caractérisé en ce que les animaux sont des animaux non-attachés qui sont nourris à leurs places d'affouragement respectives dans le meme enclos, chacune des places d'affouragement étant approvisionnée, pendant chaque période de nourrissage, de portions de nourriture qui chacune ne dépasse pas quelques bouchées et préférablement ne dépasse essentiellement pas une bouchée, par des intervalles de temps tels que la vitesse de l'approvisionnement en nourriture de chaque place d'affouragement corréspond essentiellement à la vitesse à laquelle désire manger chaque animal.

3. Procédé selon l'une des revendications 1 et 2, caractérisé en ce que le mélange de protéine digestible est un mélange liquide.

4. Procédé selon les revendications 1 à 3, caractérisé en ce que les animaux sont des porcelets.

5. Procédé selon la revendication 4, caractérisé en ce que les porcelets sont des porcelets d'un age entre le sevrage et un poids vivant d'environ 25 kg.

6. Procédé selon les revendications 1 à 5, caractérisé en ce que la proportion entre la protéine digestible et l'alimentation riche en hydrate de carbone est réduite à chaque distribution.

7. Procédé selon les revendications 1 à 6, caractérisé en ce que la proportion entre le mélange de protéine digestible et l'hydrate de carbone est réduite pendant chaque distribution.

8. Procédé selon la revendication 5, caractérisé en ce que la réduction de la proportion est réalisée conformément à une courbe (A, B; BF, PS; PS, BG) qui représente une adaptation désirée et prédéterminée de la proportion entre la protéine digestible et l'hydrate de carbone pendant un développement controlé chez les animaux.

9. Procédé selon l'une des revendications 4 à 8, caractérisé en ce que la nourriture est mélangée individuellement d'une porcherie à l'autre et de jour en jour et éventuellement d'une distribution à l'autre à l'aide d'un appareil de distribution qui procure les doses par bouchées.

10. Procédé selon les revendications 1 à 9, caractérisé en ce que le mélange liquide de la proteine digestible est composé de constituants qui n'ont pas été soumis à un traitement de séchage, les constituants étant choisis dans le groupe constitué par du sang, des déchets d'abattoir, du contenu intestinal partiellement digéré provenant des abattoirs, des ordures ménagères, des déchets protéiques industriels, de la pulpe de poisson, du petit-lait, de la crème de levure, du lait écrémé et des déchets de caséine.

11. Procédé selon la revendication 10, caractérisé en ce que le mélange liquide contient d'autres constituants choisis parmi des enzymes, des microorganismes, des acides, des vitamines et des minéraux.

12. Procédé selon la revendication 10 ou 11, caractérisé en ce que le mélange liquide a un contenu en matière sèche d'environ 20 à 45, de préférence de 25 à 40 pour cent en poids.

13. Procédé selon la revendication 11 ou 12, caractérisé en ce que le mélange liquide est conservé en réduisant son indice pH à environ 4 à 5 par l'addition d'une culture de bactéries produisant de l'acide lactique à raison d'environ $10^4$ à $10^6$ par gramme de nourriture et en assurant que la nourriture contient des nutriments suffisants pour la culture.

14. Procédé selon les revendications 10 à 13, caractérisé en ce que le mélange liquide contient aussi des constituants choisis dans le groupe constitué par des suppléments de fer, par des additifs de minéraux traceurs et par des antibiotiques qui stimulent la croissance.

# Fig. 1.

WEIGHT ( kg )

GROUP 1

GROUP 3

GROUP 2

DATE

# Fig. 2.

kg PS/kg.BF

A

B

AGE (WEEKS)

WEIGHT ( kg )

1

# Fig. 3.

0 073 806

Fig. 4.

kg/day — BF, PS — AGE (WEEKS)

Fig. 5.

kg/day — PS, BG — AGE (WEEKS)

3